# EUROPEAN PATENT APPLICATION

(11) **EP 4 707 875 A1**
(43) Date of publication of application: **11.03.2026**
(21) Application number: 25198656.8
(22) Date of filing: 28.08.2025
(51) Int. Cl.: G01V 8/00, G01V 11/00

(54) **SECURITY SCANNER SYSTEM**

(30) Priority: 03.09.2024 US 202418822748; 15.07.2025 US 202519269785
(71) Applicant: Rohde & Schwarz GmbH & Co. KG, 81671 München (DE)
(72) Inventor: Landesberger, Julian, 81671 München (DE); Evers, Christian, 81671 München (DE); Lenhart, Bjoern, 81671 München (DE); Maire, Cyrille, 81671 München (DE); Schiessl, Andreas, 81671 München (DE); Gumbmann, Frank, 81671 München (DE); Root, Konstantin, 81671 München (DE); Rasch, Richard, 81671 München (DE)
(74) Representative: Prinz & Partner mbB

(57) **Abstract**

Embodiments of the present disclosure relate to a security scanner system (10). The security scanner system (10) has platform (20) with a standing surface (22) for the person (12) to be scanned and at least one panel (16, 18). The scanner system (10) comprises a millimeter wave scanner (24) located in the at least one panel (16, 18) that provides scanner data. The scanner system (10) has at least one sensor (30) in addition to the millimeter wave scanner (24), wherein the at least one sensor (30) is located in the platform (20) and provides sensor data. The scanner system (10) comprises an evaluation circuit (32) that is configured to evaluate both the scanner data and the sensor data during an evaluation process. The evaluation circuit (32) is configured to apply at least one predefined criterion on the data to verify whether an alarm is set. The scanner system (10) has an alarm device (34) that outputs an alarm in case the evaluation circuit (32) has set the alarm during the evaluation process. Further, a method of detecting an object (11) of interest at a person (12) to be scanned by using a security scanner system (10) is described.

## Description

The invention relates to a security scanner system for detecting an object of interest at a person to be scanned. Further, the invention relates to a method of detecting an object of interest at a person to be scanned by using a security scanner system.

Security screening systems, also called security scanner systems, are widely deployed at airports, government buildings, and other high-security facilities to detect concealed dangerous objects on persons. Millimeter wave scanners have become a standard technology for person screening due to their ability to detect objects concealed beneath clothing while being safe for human exposure.

Conventional millimeter wave scanners typically comprise scanning panels positioned to define a passage through which a person walks or stands during screening. These scanners generate millimeter wave signals that penetrate clothing but reflect off the human body and concealed objects, allowing for the detection of potentially dangerous items, namely objects of interest.

However, current security screening processes often require additional separate screening steps for specific items such as footwear, as shoes can be used to conceal dangerous materials, e.g. within a shoe sole. Traditional approaches include requiring passengers to remove their shoes for separate X-ray screening or using standalone shoe scanning devices. These separate processes create bottlenecks in security checkpoints, require additional space and personnel, and slow down the overall screening process.

The separation of primary scanning and specialized item scanning creates several disadvantages. First, it requires multiple pieces of equipment and additional floor space at security checkpoints. Second, it necessitates separate operational procedures and additional personnel to manage the different screening processes.

There remains a need for an improved scanner system that overcomes the disadvantageous mentioned above with respect to the prior art security scanner systems.

The invention provides a security scanner system for detecting an object of interest at a person to be scanned. The security scanner system comprises a platform with a standing surface for the person to be scanned and at least one panel that extends into a direction (substantially) perpendicular to the standing surface. For instance, the security scanner system may comprise a first panel and a second panel positioned at a distance from each other such that a passage is defined between the first panel and the second panel. The security scanner system has a millimeter wave scanner located in the at least one panel, which has a scan volume that encompasses an area above the standing surface. For instance, the scan volume is located in the passage. The millimeter wave scanner provides scanner data, e.g. raw image data. Further, the security scanner system has at least one sensor in addition to the millimeter wave scanner. The at least one sensor is located in the platform, wherein the at least one sensor is orientated with regard to its detection field towards the scan volume so as to sense the scan volume from below. Hence, the at least one sensor is positioned in a plane perpendicular to an extension direction of the at least one panel. The sensor provides sensor data in addition to the scanner data. In addition, the security scanner system comprises an evaluation circuit connected with the millimeter wave scanner and the at least one sensor. The evaluation circuit is configured to evaluate both the scanner data and the sensor data during an evaluation process and to apply at least one predefined criterion on the scanner data and/or the sensor data at least partly to verify whether an alarm is set. Furthermore, the security scanner system comprises an alarm device connected with the evaluation circuit that outputs an alarm in case the evaluation circuit has set the alarm during the evaluation process.

The invention also provides a method of detecting an object of interest at a person to be scanned by using a security scanner system. A millimeter wave scanner located in at least one panel scans the person in a scan volume, thereby providing scanner data. At least one sensor in addition to the millimeter wave scanner scans the person, thereby providing sensor data. The at least one sensor is located in a platform with a standing surface for the person to be scanned which is substantially perpendicular to an extension direction of the at least one panel. The at least one sensor faces with regard to its detection field the scan volume so as to sense the scan volume from below. The scanner data and the sensor data are processed by an evaluation circuit that is connected with the millimeter wave scanner and the at least one sensor. The evaluation circuit evaluates the scanner data and the sensor data during an evaluation process. The evaluation circuit applies at least one predefined criterion on the scanner data and/or the sensor data at least partly to verify whether an alarm is set. An alarm device connected with the evaluation circuit outputs an alarm in case the evaluation circuit set the alarm during the evaluation process.

This integrated approach eliminates the need for separate screening equipment and enables correlation of data from multiple sensors, improving detection accuracy while reducing operational complexity and space requirements. In fact, the integration ensures the possibility of correlating the data of the primary scanner, namely the millimeter wave scanner, and the specialized scanner, namely the at least one additional sensor, which improves the overall detection accuracy of the security scanner system, thereby also reducing false alarms. This is achieved since the different data, namely the scanner data and the sensor data, are processed by the evaluation circuit such that insights of both kinds of data can be used for the analysis, namely detecting the object of interest.

Thus, the integrated scanning method provides comprehensive threat detection through coordinated analysis of multiple sensor inputs, namely the millimeter wave scanner and the at least one sensor in addition thereto, thereby significantly improving detection accuracy compared to single-sensor approaches.

In addition, information obtained from the millimeter wave scanner can be used to optimize the evaluation of the additional sensor data gathered from the at least one sensor.

For instance, the millimeter wave scanner provides information that could be used to enhance the analysis of the sensor data from the at least one sensor.

Accordingly, the integrated security scanner system combines millimeter wave scanning with additional sensor capabilities for comprehensive screening, namely the one of the sensor, particularly for specialized areas or items like shoes, while utilizing combined data analysis to improve detection accuracy and operational efficiency.

The evaluation circuit may be a processor or a microprocessor with a detection algorithm or an artificial intelligence installed thereon that is configured to detect and determine the object of interest when processing the scanner data and/or the sensor data, particularly a range image created from the respective data. The evaluation circuit may be part of an evaluation module that comprises several circuits, for instance graphical processor units (GPUs). In fact, the evaluation circuit applies the at least one predefined criterion which is associated with the detection algorithm or the artificial intelligence installed. As indicated above, the at least one criterion is used to identify a potential threat, e.g. to classify the respective data accordingly in order to check whether a potential threat is encompassed in the data.

The security scanner system may be generally configured to detect the presence of the object of interest using range imaging.

Generally, a person standing in front of the at least one panel or walking along the at least one panel may be scanned, namely a still-standing person or a walking person. Moreover, disabled persons using a wheelchair may be checked by the security scanner system as well, namely the persons and their wheelchairs. Again, the disabled person may also be checked while being stationary or moving with respect to the at least one panel.

The millimeter wave scanner is integrated in the at least one panel, for instance in a first panel and a second panel in case two panels are provided which define a passage for the person to be scanned. The millimeter wave scanner might comprise at least two antennas, e.g. a transmission antenna and a reception antenna, which can be integrated in the at least one panel, for instance in the first panel or the second panel or in both panels. Generally, the integration provides a compact design that maximizes the use of available space while maintaining optimal scanning coverage of the detection area. Moreover, the antennas are securely housed within the panel(s). The transmission antenna and the reception antenna may be movable, for instance rotatable, such that they can cover the scan volume. Consequently, the panel may relate to a device capable of accommodating the millimeter wave scanner, namely the at least one transmission antenna and the at least one reception antenna.

Particularly, the millimeter wave scanner comprises several antennas, for instance an antenna array. These several antennas may be stationary, but covering the scan volume due to their number and arrangement.

Generally, the millimeter wave scanner may be a whole-body imaging device used for detecting objects concealed underneath a person's clothing using a form of electromagnetic radiation, namely a so-called (quick) personnel security scanner. The millimeter wave scanner may be an active or a passive one. An active scanner directs millimeter wave energy at the subject and then interprets the reflected energy. A passive scanner creates images using only ambient radiation and radiation emitted from the human body or objects.

The platform of the security scanner system encompasses the at least one sensor for scanning the person to be scanned from below, e.g. up to a height of at least 35 cm for also scanning bootlegs. The at least one sensor is integrated into the platform while facing upwardly, namely towards the scan volume. This configuration enables simultaneous scanning of the person from multiple angles and positions, particularly effective for detecting objects concealed in footwear or lower body areas of the person to be scanned.

In other words, the at least one sensor has a scan volume that is orthogonal to the scan volume of the millimeter wave scanner. The scan volumes of the millimeter wave scanner and the at least one sensor may overlap with each other (partly). It is however also possible that the scan volumes of the millimeter wave scanner and the at least one sensor do not overlap with each other.

According to an aspect, the evaluation circuit is configured to process both the scanner data and the sensor data, thereby creating combined data on which the at least one predefined criterion is applied during the evaluation process. Hence, the different kinds of data, namely the scanner data and the sensor data, are fused at least party by means of the evaluation circuit, thereby creating the combined data based on which the analysis is done, namely the verification whether an alarm is to be set or nor.

According to another aspect, the alarm device is a display device that is capable of illustrating the scanner data, the sensor data, and/or the combined data. The display device outputs an optical alarm in case the evaluation circuit sets the alarm. This visual presentation allows operators to quickly assess the nature and location of detected object, facilitating rapid decision-making and appropriate response measures. The display device may illustrate the entire person scanned, wherein a region associated with the object causing the alert may be highlighted in the illustration in order to facilitate its identification, particularly in real world by a security person. Depending on the certainty of the object identified, the respective region may be colored differently, for instance yellow or red.

Alternatively or additionally to the optical alert, an acoustic alert may be output.

A further aspect provides that the platform comprises at least one support that extends through a printed circuit board of the at least one sensor, wherein the at least one support supports the standing surface. The support ensures that the standing surface on which the person to be scanned stands during the scan does not bend. Moreover, persons with different weights can be scanned in an accurate manner. The overall configuration of the platform with the integrated sensor ensures that both the electrical and mechanical requirements are fulfilled for proper operation. The sensor is designed such that the support(s) may extend through the printed circuit board.

According to an embodiment, the at least one sensor is a metal detector. This combination provides complementary detection capabilities, as metal detectors can identify metallic objects that may not be clearly visible in millimeter wave images, enhancing overall detection reliability. The metal detector scans a static field such that no movement of the person to be scanned is necessary.

The metal detector is enabled to balance itself after performing a scan. In fact, this might be done by performing a scan of an empty scan volume, for instance after each real scan. This ensures that the metal detector is enabled to perform reliable scans, namely gather reliable scan results.

According to another embodiment, the at least one sensor comprises at least one transmitter for transmitting a millimeter wave signal and at least one receiver for receiving a reflected millimeter wave signal. In case of only one transmitter and only one receiver, the transmitter and the receiver are movable so as to cover the scan volume. This configuration allows for specialized millimeter wave scanning from different angles or with different parameters, providing enhanced imaging capabilities for specific areas of interest, e.g. shoes (footwear). In fact, the at least one transmitter for transmitting a millimeter wave signal and the at least one receiver for receiving a reflected millimeter wave signal together form a millimeter wave scanner for shoes which is located in the platform. The millimeter wave scanner for shoes can be operated when the person to be scanned is stationary or moving.

Generally, the security scanner system comprises both the metal detector and the millimeter wave scanner for shoes in addition to the millimeter wave scanner for the body. Both the metal detector and the millimeter wave scanner for shoes may be integrated within the platform. For instance, the metal detector may comprise a coil located in a plane, which encircles the at least one transmitter and the at least one receiver of the millimeter wave scanner for shoes.

The millimeter wave scanner for shoes can identify metallic objects as well as non-metallic objects located in the shoes.

As described above, the platform has supports that may protect the transmitter(s), the receiver(s) and/or the metal detector, particularly all components integrated within the platform, since the standing surface will not be bent.

For instance, the at least one sensor comprises at least one antenna array with several antennas, wherein the several antennas comprise transmission antennas and receiving antennas. The several antennas are designed and arranged so as to cover the scan volume. Thus, it is not necessary to move the antennas anymore, thereby reducing the costs and efforts. The antenna array configuration enables precise beam forming and steering, allowing for focused scanning of specific areas and improved signal-to-noise ratio in the detection process.

Another aspect provides that the platform is has a thickness adapted for the frequency of the millimeter wave signal. The platform may have a thickness that is equal to the wavelength of the signals used or a multiple thereof, particularly a center frequency of the signals used. Hence, interferences of the signals with the material of the platform can be reduced.

Particularly, the at least one sensor and the millimeter wave scanner work at different frequencies. This frequency separation prevents interference between the scanning systems and allows each sensor to be optimized for its specific detection task, improving overall system performance of the security scanner system.

It is however also feasible that the at least one sensor and the millimeter wave scanner work at the same frequency, particularly in case of subsequent operation.

According to a further aspect, the security scanner system comprises a camera that provides camera data. The evaluation circuit is connected with the camera and configured to evaluate the camera data together with the scanner data and/or the sensor data during the evaluation process. This multi-modal approach combines visual information with electromagnetic scanning data, enabling more accurate object identification and reducing false alarm rates. The camera data may be used for detecting the type of the shoes, thereby gathering information of the shoes, e.g. the material, which may be used later during the evaluation process.

Moreover, the camera data may be used for a posture check of the person to be scanned, namely whether the person stands correctly with regard to the at least one sensor and/or the millimeter wave scanner. A feedback of the posture check may be outputted via the alarm device, particularly the display device.

Generally, the security scanner system may be enabled to check a posture of the person to be scanned, wherein the security scanner system triggers the at least one sensor to perform a scan in case the posture check was successful. In other words, the scan from below may only be triggered after the person passed the posture check, thereby avoiding unnecessary scans from below and accelerating the overall scan. The posture check may be done based on the camera data as described above, but also based on the scanner data, namely the data obtained from the millimeter wave scanner that scans the person.

Actually, the millimeter wave scanner is a person scanner for scanning a person standing in front the at least one panel or walking along the at least one panel.

According to an aspect, the scanner data is evaluated by the evaluation circuit solely prior to evaluating the sensor data in order to determine at least one shoe parameter, e.g. whether a shoe is worn by the person, a thickness and/or a volume of at least a part of a shoe worn by the person, based on which the sensor data is evaluated afterwards. This sequential processing approach allows the millimeter wave scanner results to inform and optimize the analysis of additional sensor data, improving detection efficiency and reducing false alarms.

According to another aspect, a surface of at least a part of a shoe worn by the person is reconstructed by evaluating the scanner data. This surface reconstruction provides detailed three-dimensional information about the scanned person, enabling precise localization of anomalies and improved threat assessment capabilities. The reconstruction may be done in an iterative manner. Hence, the surface is reconstructed by means of an algorithm in an iterative manner until the surface is reconstructed in a sufficient manner. For the reconstruction, prior information of the shoe, e.g. the material of the shoe, may be used.

Based on the scanner data, a shoe sole of a shoe worn by the person and a sole of the foot of the person may be detected, wherein a distance of the sole of the foot to the shoe sole is determined, thereby identifying a volume. This volume calculation enables assessment of available space within footwear for concealing dangerous materials, namely the object of interest, providing critical information for threat evaluation.

Particularly, the volume identified is sensed by the at least one sensor or the sensor data is analyzed with respect to the volume identified. This targeted analysis focuses additional sensor capabilities on areas of highest risk, optimizing detection resources and improving overall system effectiveness.

Furthermore, shoes worn by the person to be scanned may be scanned by the at least one sensor from below. This bottom-up scanning approach provides unique access to shoe soles and internal structures that may not be visible from other angles, e.g. the millimeter wave scanner, thereby enhancing footwear screening capabilities.

The shoes worn by the person to be scanned may be scanned by the millimeter wave scanner at their rear and their front, wherein the length of the shoes is determined based on the information obtained. Particularly, the position of the heel and the positions toes within the shoes worn are determined. This dimensional analysis provides important sizing information that can be used to assess the potential for concealment and to optimize additional sensor analysis. Depending on the results obtained from the millimeter wave scanner, the sensor may be operated in a specific way such that optimized scanning is done by the sensor. Moreover, the scan of the sensor could be skipped in case the results obtained from the millimeter wave scanner already indicate that no threat is possible.

Particularly, the evaluation circuit applies pre-trained models when evaluating the scanner data and/or the sensor data, for instance when evaluating the combined data. Hence, a machine learning approach may be used that enables automated threat recognition and classification, reducing operator workload while maintaining high detection accuracy and consistency. The pre-trained models may also be used for the reconstruction algorithms.

The security scanner system incorporates machine learning and artificial intelligence capabilities through pre-trained models that automate threat recognition and classification. These models can analyze both individual sensor data streams, namely the scanner data or the sensor data solely, and combined data to identify patterns indicative of concealed dangerous objects. The Al-based approach reduces operator workload while maintaining consistent detection performance across different operational conditions.

The security scanner system, particularly the evaluation circuit, is enabled to verify whether a metallic object identified in the shoe(s) is a threat or not, e.g. a metallic strengthening part, by analyzing the sensor data. In case both shoes comprise the same kind of metallic object, this might be a hint towards a non-threating metallic object. This can be further verified based on the machine learning and artificial intelligence capabilities, namely through pre-trained models.

Generally, the present disclosure is characterized by several key technical features that distinguish it from conventional security screening systems. First, the integration of multiple sensor technologies within a single security scanner system eliminates the need for separate screening equipment and reduces operational complexity. The millimeter wave scanner serves as the primary detection system while the at least one additional sensor provides complementary detection capabilities, creating a multi-modal approach that significantly improves detection accuracy and reduces false alarm rates.

A critical aspect is the sophisticated data fusion approach implemented by the evaluation circuit. Rather than simply analyzing the sensor outputs independently, the security scanner system may employ sequential processing where the scanner data of the millimeter wave scanner is first analyzed to extract contextual information such as object dimensions, material properties, and/or structural characteristics. This information is then used to optimize the analysis of the additional sensor data, namely the sensor data of the at least one sensor, thereby creating an intelligent feedback loop that enhances overall detection performance.

Actually, the security scanner system provides advanced footwear analysis capabilities by reconstructing three-dimensional surface information of shoes and feet. The security scanner system can determine critical parameters such as shoe sole thickness, internal volume available for concealment, and the spatial relationship between the foot and shoe interior. This information enables targeted analysis of potential threat areas and provides operators with quantitative assessments of concealment risk.

The integration of the at least one sensor within the platform structure represents a significant advancement. By positioning the at least one additional sensor in the ground plate, namely the platform, the security scanner system can perform bottom-up scanning of footwear while simultaneously conducting conventional millimeter wave scanning from the at least one panel. This multi-directional approach provides comprehensive coverage and access to areas that would otherwise be difficult to inspect. For instance, the shoe soles might be a blind spot for conventional person scanners.

The security scanner system demonstrates adaptive operational capabilities by adjusting parameters of the at least one sensor and adjusting analysis algorithms based on real-time assessment of the scanned person.

For example, the security scanner system can automatically determine whether a person is wearing shoes and adjust the scanning protocol accordingly. This adaptive behavior optimizes resource utilization and improves screening efficiency.

The visual presentation provided by the security scanner system, particularly the display device, provides comprehensive operator interface capabilities by displaying multiple data types including raw sensor data, processed images, and combined analysis results. The display device can highlight detected anomalies with visual indicators and provide contextual information to assist operator decision-making. This integrated display approach consolidates information from multiple sensors into a coherent operational interface.

The security scanner system incorporates a specialized platform configuration that enables comprehensive footwear screening capabilities. The platform serves as both a standing surface for persons being scanned and as an integrated sensor platform. Additional sensors positioned within the platform can perform bottom-up scanning of footwear, providing access to shoe soles and internal structures that would otherwise be difficult to inspect from conventional scanning angles.

In other words, the security scanner system employs a dual scanning approach where the primary millimeter wave scanner integrated in the at least one panel performs conventional person scanning, while the at least one specialized sensor in the platform provides targeted analysis of specific areas such as footwear. This configuration enables simultaneous multi-directional scanning, with the millimeter wave scanner capturing overall body or object information while the at least one sensor in the platform focuses on areas of particular security concern, namely the shoes.

The security scanner system includes the integrated display device that provides real-time visualization of the scanning results from both the primary millimeter wave scanner and the at least one additional sensor. The display device can present combined data analysis results, highlight detected anomalies, and provide operators with comprehensive information for making informed security decisions. This integrated approach eliminates the need for separate display systems for different sensor types.

The foregoing aspects and many of the attendant advantages of the claimed subject matter will become more readily appreciated as the same become better understood by reference to the following detailed description, when taken in conjunction with the accompanying drawings, wherein
- Figure 1 shows a perspective view of an exemplarily security scanner system according to an embodiment of the present disclosure, wherein a person is standing in a passage between two panels,
- Figure 2 shows a sectional view of a platform used in the security scanner system of Figure 1, and

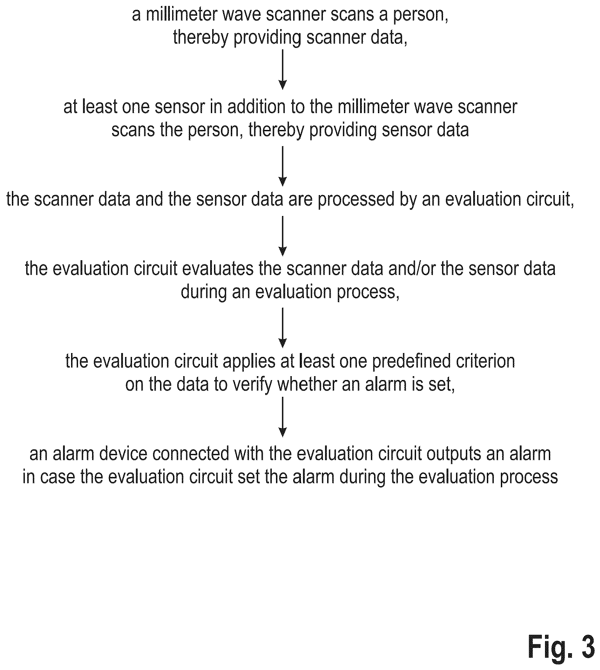

- Figure 3 shows a schematic flow-chart of a method of detecting an object of interest by using a scanner system according to an embodiment of the present disclosure.

The detailed description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter to the precise forms disclosed.

For the purposes of the present disclosure, the phrase "at least one of A, B, and C", for example, means (A), (B), (C), (A and B), (A and C), (B and C), or (A, B, and C), including all further possible permutations when more than three elements are listed. In other words, the term "at least one of A and B" generally means "A and/or B", namely "A" alone, "B" alone or "A and B".

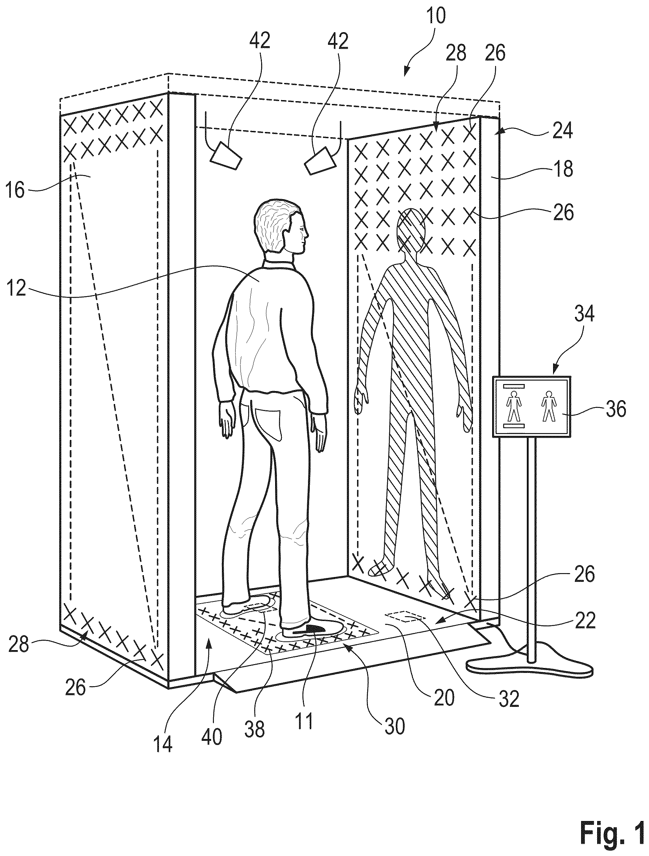

Figure 1 shows a security scanner system 10 for detecting an object 11 of interest, e.g. a knife in a shoe as shown.

In the shown embodiment, the security scanner system 10 is a person scanner for scanning a person 12 standing in or walking through a passage 14 defined between two scanning panels, namely a first panel 16 and a second panel 18. The first panel 16 and the second panel 18 are positioned at a distance from each other to define the passage 14 through which the person 12 being scanned can stand or walk.

It is however sufficient that the security scanner system 10 has only one panel for scanning the person 12 standing in front of the single panel or walking by. For scanning all sides, the person 12 might have to turn in front of the single panel.

The security scanner system 10 also has a platform 20 onto which a standing surface 22 for the person 12 to be scanned is provided.

The security scanner system 10 comprises a millimeter wave scanner 24 that has a scan volume that encompasses an area above the standing surface 22. In the shown embodiment, the scan volume is located in the passage 14 between the panels 16, 18.

The millimeter wave scanner 24 shown comprises several antenna elements 26, namely transmission antennas and reception antennas. For instance, the millimeter wave scanner 24 has at least one antenna array 28, particularly two antenna arrays 28, with the several antenna elements 26.

The antenna arrays 28 enable precise beam forming and steering capabilities, allowing the millimeter wave scanner 24 to focus scanning energy on specific areas of interest identified by the millimeter wave scanner 24. The antenna arrays 28 can be configured as full arrays with dense antenna spacing or sparse arrays with optimized antenna placement to achieve the desired scanning coverage while minimizing system complexity and cost.

The multiple antenna elements 26 work in coordination to create focused scanning beams that can be electronically steered to target specific regions without requiring mechanical movement.

As shown in Figure 1, the antenna elements 26 are located in the panels 16, 18 such that the millimeter wave scanner 24 is integrated within the first panel 16 and the second panel 18. In other words, the panels 16, 18 house the millimeter wave scanning components of the millimeter wave scanner 24, namely the antenna elements 26, that provide a primary scanning mechanism for detecting concealed objects on the person 14, namely scanner data.

As mentioned above however, the security scanner system 10 may also have only one panel such that the millimeter wave scanner 24 has only one antenna array 28.

Alternatively to the several antenna elements 26, the millimeter wave scanner 24 may have only one movable transmission antenna and only one movable reception antenna in order to cover the scan volume.

In addition, the security scanner system 10 has at least one additional sensor 30 that is located in the platform 20, thereby providing additional scanning capabilities. Accordingly, the platform 20 serves as a ground plate while having the standing surface 22 for the person 12 being scanned and incorporates the at least one additional sensor 30.

Consequently, the at least one additional sensor 30 is positioned in a plane perpendicular to the extension direction of the panels 16, 18. The platform 20 with the integrated additional sensor 30 enables bottom-up scanning of the person's footwear and lower body areas that would otherwise be difficult to access from conventional scanning angles. In fact, the at least one sensor 30 is orientated with regard to its detection field towards the scan volume so as to sense the scan volume from below. Thus, the integration of the additional sensor 30 within the platform 20 allows for simultaneous multi-directional scanning while the person 12 remains in a single position. The at least one additional sensor 30 when scanning the person 12 provides sensor data.

Moreover, the security scanner system 10 has an evaluation circuit 32 that is connected with both the millimeter wave scanner 24 and the at least one additional sensor 30 such that the evaluation circuit 32 is enabled to process both the scanner data and the sensor data. When processing the data, the evaluation circuit 32 evaluates the data, thereby creating combined data.

During the evaluation process, the evaluation circuit 32 applies at least one predefined criterion on the combined data to verify whether an alarm is set. The alarm is set in case a thread was detected while processing the scanner data, the sensor data and/or the combined data as will be described later in more detail.

The security scanner system 10 also comprises an alarm device 34 that is established by a display device 36 in the shown embodiment. In other words, the display device 36 serves as the alarm device 34 even though the display device 36 may display/illustrate further information, especially data not related to the alarm set by the evaluation circuit 32.

The alarm device 34 is connected to the evaluation circuit 32 and outputs visual information to an operator of the security scanner system 10.

The alarm device 34 is capable of illustrating the scanner data from the millimeter wave scanner 24, the sensor data from the additional sensor 30, and the combined data resulting from the evaluation process, for instance a coordinated analysis of both data streams, namely the scanner data and the sensor data.

When the evaluation circuit 32 determines that an alarm condition exists based on the predefined criteria applied to the respective data, the alarm device 34 outputs an (optical) alarm to alert operators to the detected threat, namely the object 11 of interest like the knife. Hence, the alarm device 34 provides real-time feedback to the operators.

This configuration enables comprehensive screening through the coordinated operation of the millimeter wave scanner 24 and the additional sensor 30, with all data being processed by the evaluation circuit 32 and presented through the alarm device 34, particularly the display device 36.

The integrated configuration shown eliminates the need for separate screening equipment by consolidating multiple sensor technologies within a single structure. The person 12 being scanned experiences a streamlined screening process, standing in one location or walking through the passage 14 while multiple sensor systems simultaneously collect data from different angles and positions, namely the millimeter wave scanner 24 and the additional sensor 30. This approach significantly improves operational efficiency compared to conventional systems that require separate screening steps for different body areas or items.

The configuration also enables the evaluation circuit 32 to perform sophisticated data fusion, using information from the millimeter wave scanner 24 to optimize the analysis of data from the at least one additional sensor 30.

For example, the millimeter wave scanner 24 can determine whether the person 12 is wearing shoes, the thickness of shoe soles, and/or the available volume within footwear. This information can be used to focus and optimize the analysis of sensor data from the at least one additional sensor 30 integrated in the platform 20, which specifically targets the footwear area.

The display device 36 provides operators with a comprehensive interface that consolidates information from all scanning systems, e.g. the millimeter wave scanner 24 and the at least one additional sensor 30, presenting both individual results and/or combined analysis outcomes.

This integrated approach enables operators to make informed security decisions based on correlated data from multiple scanning technologies, thereby improving detection accuracy while reducing the likelihood of false alarms through the enhanced situational awareness provided by the multi-modal scanning approach.

According to the shown embodiment, the at least one additional sensor 30 comprises antennas 38, e.g. transmitters and receivers, for millimeter wave signals, creating a secondary millimeter wave scanning capability distinct from the primary millimeter wave scanning capability provided by the millimeter wave scanner 24, e.g. the one integrated in the panels 16, 18.

The additional millimeter wave components of the at least one additional sensor 30 may be positioned in the platform 20, namely the ground plate, to provide bottom-up scanning of the person 12, offering a different perspective and scanning angle compared to the primary scanning capability of the millimeter wave scanner 24.

The additional millimeter wave antennas 38, namely the at least one additional sensor 30, can operate at different frequencies than the primary millimeter wave scanning capability provided by the millimeter wave scanner 24 to prevent interference while providing enhanced imaging capabilities for specific areas such as footwear soles and internal shoe structures. In other words, the security scanner system 10 may employ frequency separation between the primary millimeter wave scanning capability, e.g. the millimeter wave scanner 24, and the secondary millimeter wave scanning capability, namely the at least one additional sensor 30, to prevent interference and optimize performance. Accordingly, the millimeter wave scanner 24 may operate in one millimeter wave frequency band while the at least one additional sensor 30 operates in a different frequency band, ensuring that the simultaneous operation of multiple scanning capabilities does not degrade the performance of individual scanning capabilities. This frequency separation also allows each sensor type to be optimized for its specific detection task, with the primary scanning capability, namely the millimeter wave scanner 24, being optimized for general person scanning and the secondary scanning capability, namely the additional sensor 30, being optimized for specialized applications such as footwear analysis.

Alternatively to the additional sensor 30 having millimeter wave scanning capability or additionally thereto, the security scanner system 10 may incorporate a metal detector 40 positioned in the platform 20, namely the ground plate of the sensor system 10.

As indicated above, the metal detector 40 may be provided in addition to the at least one additional sensor 30 having millimeter wave scanning capability while comprising antennas 38 such that the sensor system 10 comprises the millimeter wave scanner 24, the additional sensor 30 and the metal detector 40.

Alternatively, the additional sensor 30 may be established by the metal detector 40 such that the sensor system 10 comprises only the metal detector 40 and the millimeter wave scanner 24 which has the millimeter wave scanning capability.

In any case, the metal detector 40 provides complementary detection capabilities to the millimeter wave scanner 24 by specifically targeting metallic objects that may be concealed within footwear or other areas of the person 12 being scanned. The metal detector 40 may operate using electromagnetic induction principles, generating a magnetic field and detecting disturbances caused by metallic objects. When integrated with the scanner data, the sensor data of the metal detector 40 enhances the overall threat detection capability by providing specific identification of metallic threats that may not be clearly distinguishable in millimeter wave images alone.

The security scanner system 10 may include one or more cameras 42 that provide visual image data, namely camera data, to complement the scanner data and/or the sensor data. The camera(s) 42 can be positioned to capture images of the person 12 being scanned from various angles, providing additional visual context for the evaluation process, particularly in addition to the scanner data and/or the sensor data.

For instance, a posture check of the person 12 to be scanned can be done based on the camera data. Moreover, information about the shoes, e.g. the material, may be gathered based on the camera data.

The camera data is processed by the evaluation circuit 32 along with the scanner data and sensor data, enabling multi-modal analysis that combines visual information with electromagnetic scanning results. This integration allows for enhanced object identification, improved false alarm reduction, and better operator situational awareness through the correlation of visual and electromagnetic data. In fact, the information about the material of the shoes, e.g. the shoe soles, may be used for reconstruction algorithms applied on the scanner data and sensor data.

The security scanner system 10 is generally configured to check a posture of the person 12 to be scanned, and wherein the security scanner system 10 triggers the at least one sensor 30 to perform a scan in case the posture check was successful. The posture check can be based on the camera data as described above, but also on the scanner data provided by the millimeter wave scanner 24.

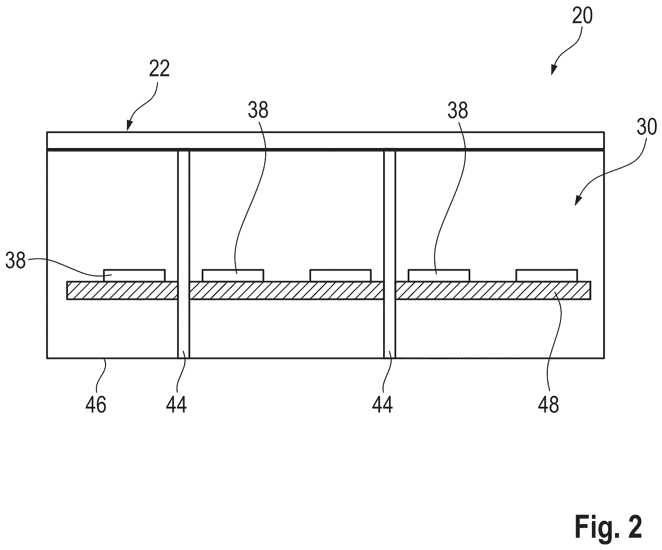

In Figure 2, the platform 20 is shown in a schematic sectional view.

The platform 20 has supports 44 that extend from a bottom 46 through a printed circuit board 48 of the at least one sensor 30, on which the antennas 38 are provided, namely the antenna array having the transmission antennas and the receiving antennas. The supports 44 extend towards the standing surface 22 such that the standing surface 22 is supported and the electronic components of the at least one sensor 30 are protected, namely the printed circuit board 48 and the antennas 38.

Generally, the platform 20 has a thickness adapted for the frequency of the millimeter wave signal provided by the antennas 38. For instance, the thickness of the platform 20 from the antennas 38 to the standing surface 22 corresponds to the wavelength of the millimeter wave signals used or a multiple thereof.

The platform 20, namely the ground plate, is specifically designed with a thickness optimized for millimeter wave transmission in case the additional sensor 30 is established as having millimeter wave capabilities. The plate thickness is calculated based on the wavelength of the millimeter wave signals used by the additional sensor 30, typically configured as a multiple of the wavelength to minimize reflections and maximize signal transmission efficiency. This optimization ensures that millimeter wave signals from the additional sensor 30 positioned beneath the standing surface 22 of the platform 20 can effectively penetrate the plate material and reach the footwear area with minimal attenuation or distortion, maintaining the quality of the scanning data.

Generally, the security scanner system 10 shown in Figure 1 is enabled to perform a method of detecting an object 12 of interest as described hereinafter with reference to Figure 1.

The millimeter wave scanner 24 scans the person 12, thereby providing the scanner data.

The scanner data gathered is processed by the evaluation circuit 32 that is connected with the millimeter wave scanner 24.

Further, the at least one additional sensor 30 in addition to the millimeter wave scanner 24 scans the person 12, thereby providing the sensor data.

The sensor data gathered is processed by the evaluation circuit 32 that is connected with the at least one additional sensor 30 as well.

Generally, the scanner data and the sensor data are processed by the evaluation circuit 32 that evaluates the scanner data and/or the sensor data at least partly during an evaluation process, thereby creating combined data.

The evaluation circuit 32 applies at least one predefined criterion on the data, e.g. the sensor data, the scanner data and/or the combined data, to verify whether an alarm is set, e.g. whether a threat is detected in the data obtained from the scanning.

The alarm device 34 is connected with the evaluation circuit 32 such that the alarm device 34 outputs an alarm in case the evaluation circuit 32 set the alarm during the evaluation process.

Accordingly, the evaluation circuit 32 implements sophisticated processing as data streams are fused for deeper insights. Particularly, the evaluation circuit 32 implements sophisticated sequential processing since the scanner data of the millimeter wave scanner 24 may be analyzed first to extract contextual information about the scanned person 12. This preliminary analysis determines key parameters such as whether the person 12 is wearing shoes, the thickness and volume of shoe soles, the overall dimensions of the shoes worn by the person 12, and the presence of specific materials or structures. At least some of this information may also be obtained from the camera data.

These parameters are then used to optimize the subsequent analysis of data from the additional sensor 30, creating an intelligent processing chain that maximizes detection accuracy while minimizing false alarms.

The security scanner system 10 performs detailed surface reconstruction of scanned objects, e.g. the footwear, using the scanner data of the millimeter wave scanner 24. This includes reconstructing the three-dimensional surface of the footwear. The surface reconstruction process identifies the boundaries between different materials and structures, such as the interface between shoe soles and feet. This detailed surface information provides critical input for optimizing the analysis of additional sensor data and for identifying areas where concealed objects may be present.

A key capability of the security scanner system 10 is the calculation of available concealment volumes within footwear. The evaluation circuit 32 analyzes the scanner data of the millimeter wave scanner 24 to detect both the shoe sole and the sole of the person's foot, determining the distance between these surfaces to calculate the available volume within the shoe.

This volume calculation provides quantitative assessment of the space available for concealing dangerous materials, enabling risk-based analysis where larger available volumes trigger more intensive additional sensor analysis. The volume information is also presented to operators via the display device 36 to assist in threat assessment decisions.

Put differently, the millimeter wave scanner 24 performs detailed analysis of footwear from multiple angles, scanning both the heel and instep areas from the front to provide the scanner data that is evaluated by the evaluation circuit 32 to obtain information about the shoe sole height and to calculate sole volume. This analysis provides critical information about whether the shoe offers sufficient space for transporting dangerous materials, generating a red/green indication system that alerts operators to potential concealment risks. The volume calculation takes into account the three-dimensional geometry of the shoe interior, providing quantitative assessment of available space for concealing prohibited items.

The additional sensor 30 positioned in the platform 20 enables bottom-up scanning of footwear, providing unique access to shoe soles and internal structures that cannot be effectively scanned from other angles. This bottom-up scanning approach can penetrate through shoe sole materials to detect objects concealed within the sole structure or between the sole and the person's foot. The bottom scanning capability is particularly effective when combined with the volume calculations from the primary scanner, namely the millimeter wave scanner 24, as it allows targeted analysis of areas identified as having significant concealment potential.

The security scanner system 10 performs comprehensive shoe dimensioning by scanning footwear from multiple angles using the millimeter wave scanner 24. The millimeter wave scanner 24 analyzes the rear and front portions of shoes to determine overall shoe length by identifying the positions of the heel and toes within the footwear. This dimensional analysis provides important sizing information that correlates with concealment potential and helps optimize the analysis of the sensor data from the additional sensor 30. The shoe dimensioning capability also enables the security scanner system 10, particularly the additional sensor 30, to adapt its scanning parameters based on the specific characteristics of the footwear being analyzed.

The evaluation circuit 32 may incorporate pre-trained artificial intelligence models for automated analysis of both scanner data and sensor data. These Al models have been trained on extensive datasets of threat and non-threat scenarios, enabling automated recognition and classification of dangerous objects. The models can analyze individual sensor data streams as well as combined data from multiple sensors, identifying patterns and signatures indicative of concealed threats. The Al-based approach provides consistent detection performance across different operational conditions and reduces the workload on human operators while maintaining high detection accuracy.

The security scanner system 10 demonstrates adaptive scanning capabilities by automatically adjusting its operation based on real-time analysis of the scanned person 12. For example, the security scanner system 10 can automatically detect whether the person 12 is wearing shoes and modify its scanning protocol accordingly. When shoes are detected, the security scanner system 10 activates specialized footwear analysis routines and optimizes the operation parameters of the additional sensor 30 for shoe scanning. When no shoes are detected, the security scanner system 10 can bypass footwear-specific analysis and focus on other areas of interest, optimizing resource utilization and scanning efficiency.

The evaluation circuit 32 implements sophisticated alarm correlation algorithms that analyze the combined data from all scanning capabilities to make final threat determination decisions. Rather than simply combining individual sensor alarms, the security scanner system 10 performs intelligent correlation that considers the spatial and temporal relationships between different scanning detections. This correlation approach significantly reduces false alarm rates by requiring consistent threat indications across multiple sensor modalities before triggering an alarm condition, while maintaining high detection probability for actual threats.

The security scanner system 10 maintains comprehensive statistics on shoe detection and removal patterns, supporting dynamic quota management for authorities and airports. The evaluation circuit 32 records whether persons are required to remove shoes prior to scanning or are not wearing shoes at all, contributing to operational statistics that help optimize security checkpoint procedures. This statistical data assists in implementing and monitoring quota-based shoe inspection policies, enabling more efficient resource allocation and improved passenger flow management.

The additional sensor 30 positioned in platform 20 may utilize prior knowledge from sole thickness measurements to optimize reconstruction algorithms for scanning through shoe soles. The ground-based sensor 30 can focus its analysis based on dimensional information provided by the millimeter wave scanner 24, enabling more accurate detection of dangerous materials concealed within footwear. This optimization approach uses the preliminary sole thickness and volume data to adjust scanning parameters, beam focusing, and signal processing algorithms for enhanced detection performance in the specific footwear being analyzed.

The security scanner system 10 employs a comprehensive multi-directional scanning approach where shoes are analyzed from multiple perspectives simultaneously. The primary millimeter wave scanner 24 in the panels 16, 18 scans footwear from above and sides, including analysis of boot shafts and lower leg areas, while the ground-based sensor 30 provide bottom-up scanning of shoe soles and internal structures. This combined approach ensures complete coverage of potential concealment areas within footwear, with each scanning direction providing complementary information that enhances overall detection capability.

The security sensor system 10 can be deployed in graduated configurations to meet different security requirements and operational constraints. The height and volume estimation capabilities can operate independently, the shoe detection functionality can run separately, and both can be combined with the millimeter wave scanner 24 in various configurations. All sensor modalities can be operated individually or in combination with the ground-based sensor 30, e.g. the additional millimeter wave scanner, providing flexibility in security scanner system 10 deployment and allowing operators to optimize the scanning configuration based on specific security needs and throughput requirements.

Certain embodiments disclosed herein, particularly the respective module(s) and/or unit(s), utilize circuitry (e.g., one or more circuits) in order to implement standards, protocols, methodologies or technologies disclosed herein, operably couple two or more components, generate information, process information, analyze information, generate signals, encode/decode signals, convert signals, transmit and/or receive signals, control other devices, etc. Circuitry of any type can be used.

In an embodiment, circuitry includes, among other things, one or more computing devices such as a processor (e.g., a microprocessor), a central processing unit (CPU), a digital signal processor (DSP), an application-specific integrated circuit (ASIC), a field-programmable gate array (FPGA), a system on a chip (SoC), or the like, or any combinations thereof, and can include discrete digital or analog circuit elements or electronics, or combinations thereof. In an embodiment, circuitry includes hardware circuit implementations (e.g., implementations in analog circuitry, implementations in digital circuitry, and the like, and combinations thereof).

In an embodiment, circuitry includes combinations of circuits and computer program products having software or firmware instructions stored on one or more computer readable memories that work together to cause a device to perform one or more protocols, methodologies or technologies described herein. In an embodiment, circuitry includes circuits, such as, for example, microprocessors or portions of microprocessor, that require software, firmware, and the like for operation. In an embodiment, circuitry includes one or more processors or portions thereof and accompanying software, firmware, hardware, and the like.

The present application may reference quantities and numbers. Unless specifically stated, such quantities and numbers are not to be considered restrictive, but exemplary of the possible quantities or numbers associated with the present application. Also in this regard, the present application may use the term "plurality" to reference a quantity or number. In this regard, the term "plurality" is meant to be any number that is more than one, for example, two, three, four, five, etc. The terms "about", "approximately", "near" etc., mean plus or minus 5% of the stated value.

## Claims

1. A security scanner system (10) for detecting an object (11) of interest at a person (12) to be scanned, the security scanner system (10) comprising:
a platform (20) with a standing surface (22) for the person (12) to be scanned;
at least one panel (16, 18) that extends into a direction substantially perpendicular to the standing surface (22);
a millimeter wave scanner (24) located in the at least one panel (16, 18), wherein the millimeter wave scanner (24) has a scan volume that encompasses an area above the standing surface (22), wherein the millimeter wave scanner (24) provides scanner data;
at least one sensor (30) in addition to the millimeter wave scanner (24), wherein the at least one sensor (30) is located in the platform (20), wherein the at least one sensor (30) is orientated with regard to its detection field towards the scan volume so as to sense the scan volume from below, wherein the at least one sensor provides sensor data;
an evaluation circuit (32) that is connected with the millimeter wave scanner (24) and the at least one sensor (30), wherein the evaluation circuit (32) is configured to evaluate both the scanner data and the sensor data during an evaluation process, and wherein the evaluation circuit (32) is configured to apply at least one predefined criterion on the scanner data and/or the sensor data at least partly to verify whether an alarm is set; and
an alarm device (34) that is connected with the evaluation circuit (32), wherein the alarm device (34) outputs an alarm in case the evaluation circuit (32) has set the alarm during the evaluation process.

2. The security scanner system (10) according to claim 1, wherein the evaluation circuit (32) is configured to process both the scanner data and the sensor data, thereby creating combined data on which the at least one predefined criterion is applied during the evaluation process.

3. The security scanner system (10) according to claim 1 or 2, wherein the alarm device (34) is a display device (36) that is capable of illustrating at least one of the scanner data and the sensor data, and wherein the display device (36) outputs an optical alarm in case the evaluation circuit (32) set the alarm.

4. The security scanner system (10) according to any one of the preceding claims, wherein the platform (20) comprises at least one support (44) that extends through a printed circuit board (48) of the at least one sensor (30), wherein the at least one support (44) supports the standing surface (22).

5. The security scanner system (10) according to any one of the preceding claims, wherein the at least one sensor (30) is a metal detector.

6. The security scanner system (10) according to any one of the preceding claims, wherein the at least one sensor (30) comprises at least one transmitter for transmitting a millimeter wave signal and at least one receiver for receiving a reflected millimeter wave signal, in particular wherein the platform (20) is has a thickness adapted for the frequency of the millimeter wave signal and/or wherein the at least one sensor (30) comprises at least one antenna array (28) with several antenna elements (28), and wherein the several antenna elements (28) comprise transmission antenna elements and receiving antenna elements.

7. The security scanner system (10) according to any one of the preceding claims, wherein the at least one sensor (30) and the millimeter wave scanner work at different frequencies.

8. The security scanner system (10) according to any one of the preceding claims, wherein the security scanner system (10) comprises a camera (42) that provides camera data, wherein the evaluation circuit (32) is connected with the camera (42) and configured to evaluate the camera data together with the scanner data and/or the sensor data during the evaluation process.

9. The security scanner system (10) according to any one of the preceding claims, wherein the security scanner system (10) is configured to check a posture of the person (12) to be scanned, and wherein the security scanner system (10) triggers the at least one sensor (30) to perform a scan in case the posture check was successful.

10. A method of detecting an object (11) of interest at a person (12) to be scanned by using a security scanner system (10), wherein a millimeter wave scanner (24) located in at least one panel (16, 18) scans the person (12) in a scan volume, thereby providing scanner data, wherein at least one sensor (30) in addition to the millimeter wave scanner (24) scans the person (12), thereby providing sensor data, wherein the at least one sensor (30) is located in a platform (20) with a standing surface (22) for the person (12) to be scanned which is substantially perpendicular to an extension direction of the at least one panel (16, 18), wherein the at least one sensor (30) faces with regard to its detection field the scan volume so as to sense the scan volume from below, wherein the scanner data and the sensor data are processed by an evaluation circuit (32) that is connected with the millimeter wave scanner (24) and the at least one sensor (30), wherein the evaluation circuit (32) evaluates the scanner data and the sensor data during an evaluation process, wherein the evaluation circuit (32) applies at least one predefined criterion on the scanner data and/or the sensor data at least partly to verify whether an alarm is set, and wherein an alarm device (34) connected with the evaluation circuit (32) outputs an alarm in case the evaluation circuit (32) set the alarm during the evaluation process.

11. The method according to claim 10, wherein the scanner data is evaluated by the evaluation circuit (32) solely prior to evaluating the sensor data in order to determine at least one shoe parameter, based on which the sensor data is evaluated afterwards.

12. The method according to claim 10 or 11, wherein a surface of at least a part of a shoe worn by the person (12) is reconstructed by evaluating the scanner data.

13. The method according to any one of claims 10 to 12, wherein, based on the scanner data, a shoe sole of a shoe worn by the person and a sole of the foot of the person (12) are detected, and wherein a distance of the sole of the foot to the shoe sole is determined, thereby identifying a volume, in particular wherein the volume identified is sensed by the at least one sensor (30) or wherein the sensor data is analyzed with respect to the volume identified.

14. The method according to any one of claims 10 to 13, wherein shoes worn by the person (12) to be scanned are scanned by the at least one sensor (30) from below and/or wherein the shoes worn by the person (12) to be scanned are scanned by the millimeter wave scanner (24) at their rear and their front, and wherein the length of the shoes is determined based on the information obtained, particularly the position of the heel and toes within the shoes worn.

15. The method according to any one of claims 10 to 14, wherein the evaluation circuit (32) applies pre-trained models when evaluating the scanner data and/or the sensor data, particularly when evaluating the combined data.
